# EUROPÄISCHE PATENTSCHRIFT

(11) **EP 3 250 098 B1**
(45) Veröffentlichungstag und Bekanntmachung des Hinweises auf die Patenterteilung: **04.03.2020**
(21) Anmeldenummer: 16700373.0
(22) Anmeldetag: 13.01.2016
(51) Int. Cl.: A47J 43/07

(54) **RÜHRGEFÄSS FÜR EINE KÜCHENMASCHINE**
MIXING VESSEL FOR A FOOD PROCESSOR
BOL MIXEUR POUR ROBOT MÉNAGER

(30) Priorität: 28.01.2015 DE 102015101250
(43) Veröffentlichungstag der Anmeldung: 06.12.2017
(73) Patentinhaber: Vorwerk & Co. Interholding GmbH, 42275 Wuppertal (DE)
(72) Erfinder: THIES, Felix, 42115 Wuppertal (DE); VON DER HEYDEN, Jan, 42499 Hückeswagen (DE); EMMERMACHER, Reiner, 59075 Hamm (DE)
(74) Vertreter: Müller, Enno
(86) Internationale Anmeldenummer: PCT/EP2016/050535
(87) Internationale Veröffentlichungsnummer: WO 2016/120067

(56) Entgegenhaltungen:
- WO-A2-02/13622
- WO-A2-02/13622
- DE-A1- 10 048 535
- DE-A1- 10 048 535
- FR-A1- 2 859 617
- FR-A1- 2 859 617
- US-A1- 2009 064 867
- US-A1- 2009 064 867

## Beschreibung

Die Erfindung betrifft ein Rührgefäß nach den Merkmalen des Oberbegriffes des Anspruches 1.

Im Stand der Technik (DE 100 48 535 A1, WO 02/13622 A2, US 2009/064867, FR 2 859 617 A1) existieren unterschiedliche Reinigungseinrichtungen zur Reinigung eines Rührgefäßes. Die Reinigungseinrichtungen dienen allesamt dazu, nach einer Zubereitung von Speisen innerhalb des Rührgefäßes an der Innenwandung anhaftende Ablagerungen zu entfernen. Beispielsweise sind manuelle Reinigungseinrichtungen, wie Bürsten, Schwämme, Stahlwolle und ähnliches, bekannt, mit deren Hilfe die Innenwandung des Rührgefäßes durch Krafteinwirkung eines Nutzers gereinigt werden kann.

Darüber hinaus ist es bekannt, ein Rührgefäß einer elektromotorisch betriebenen Küchenmaschine dadurch zu reinigen, dass innerhalb des Rührgefäßes befindliches Wasser mittels des Rührwerkes, auf welchem vorteilhaft ein Messersatz angeordnet ist, in Bewegung versetzt wird, wobei das bewegte Wasser (rotierende Wassertrombe) Ablagerungen von der Innenwandung des Rührgefäßes löst.

Obwohl sich die vorgenannten Reinigungseinrichtungen im Stand der Technik abhängig von der Art der Ablagerungen bewährt haben, nehmen diese teilweise eine große Reinigungszeitspanne in Anspruch, was für einen Nutzer, der auf eine erneute Verwendung des Rührgefäßes wartet, unkomfortabel ist. Darüber hinaus sind die beschriebenen manuellen Reinigungseinrichtungen häufig mühsam anzuwenden und damit ebenfalls unkomfortabel. Insbesondere existieren häufig besondere Bereiche innerhalb des Rührgefäßes (beispielsweise der Boden), welche durch die vorgenannten Reinigungseinrichtungen gar nicht oder nicht optimal erreicht und gesäubert werden können.

Aus der US 2012/0091245 A1 ist ein Rührgefäß bekannt, das ein Reinigungselement aufweist, das bei einer Betätigung über die Innenwandung des Rührgefäßes streicht, zur Entfernung von Ablagerungen. Hiervon ausgehend beschäftigt sich die Erfindung mit der Aufgabenstellung, eine möglichst wirksame Reinigungseinrichtung anzugeben.

Diese Aufgabe ist bei dem Gegenstand des Anspruches 1 gelöst, wobei darauf abgestellt ist, dass das Reinigungselement zusätzlich zu einer Rotation um eine Rotationsachse des Rührwerkes um eine parallel zu der Rotationsachse angeordnete Rotationsachse rotierbar ist. Neben der Rotationsbewegung um die Rotationsachse des Rührwerkes kann das Reinigungselement somit auch eine Rotation um eine zu der Rotationsachse des Rührwerkes parallele Rotationsachse durchführen, wobei es zu einer Überlagerung von zwei Rotationsbewegungen kommt, die die Reinigungsintensität und Reinigungshomogenität der Reinigungseinrichtung vorteilhaft erhöht. Insbesondere kann das Reinigungselement innerhalb eines zuvor beschriebenen Teilkreisabschnittes rotieren, so dass die Reinigungswirkung verstärkt wird. Insbesondere kann es vorgesehen sein, dass jeder Reinigungsarm einer mehrarmig ausgebildeten Reinigungseinrichtung unabhängig von den anderen Reinigungsarmen rotieren kann, so dass mehrere Rotationszentren existieren. Beispielsweise können die einzelnen Reinigungsarme an ihrem in Richtung der Innenwandung weisenden Endbereich ein rotationsbewegliches Trägerelement mit Reinigungselementen, beispielsweise mit Borsten, aufweisen, wobei das Trägerelement vorteilhaft eine kreisförmige Platte mit gezahnter Umfangsfläche ist, die nach der Art eines Zahnradgetriebes beispielsweise mit einer korrespondierenden Verzahnung der Innenwandung interagiert. Alternativ können die rotationsbeweglichen Trägerelemente auch unabhängig von einer Rotation des Rührwerkes separat mittels eines Elektromotors angetrieben werden.

Es kann vorgesehen sein, dass das Reinigungselement in Zusammenwirkung mit dem Rührwerk ein Planetengetriebe bildet, wobei zumindest ein Teilbereich des Rührwerkes als Sonnenrad wirkend ausgebildet ist und wobei das Reinigungselement als Planetenrad wirkend ausgebildet ist. Vorteilhaft ist das Reinigungselement dabei so angeordnet, dass dieses sowohl die Innenwandung des Rührgefäßes, als auch Teilbereiche des Rührwerkes kontaktiert und dadurch reinigt. Selbstverständlich ist es jedoch auch möglich, nur einen der genannten Bereiche zu reinigen.

Die Reinigungseinrichtung muss nicht manuell von dem Nutzer gehalten und bewegt werden, sondern ist vielmehr an dem Rührgefäß angeordnet, d. h. befestigt. Die Reinigungseinrichtung ist so betätigbar, dass diese über Teile der Innenwandung und/oder des Rührwerkes streicht und dabei Ablagerungen löst. Die Betätigung kann grundsätzlich motorisch oder manuell erfolgen, wobei eine motorische Betätigung vorteilhaft im Sinne eines Nutzerkomforts ist. Die Betätigung der Reinigungseinrichtung erfolgt beispielsweise so, dass ein an der Reinigungseinrichtung angeordneter Motor ein Reinigungselement oder mehrere Reinigungselemente über die Innenwandung der Gefäßwand bewegt, insbesondere rotiert. Der Motor ist dabei ein Teil der Reinigungseinrichtung. Alternativ ist es jedoch auch möglich, dass für die Betätigung der Reinigungseinrichtung ein Motor der Küchenmaschine genutzt wird, welcher dem Drehantrieb für das Rührwerk zugeordnet ist.

Es wird vorgeschlagen, dass die Reinigungseinrichtung so mit dem Rührwerk verbindbar ist, dass das Reinigungselement bei einer Rotation des Drehantriebes der Küchenmaschine mitbewegt wird. Die Reinigungseinrichtung nutzt folglich den Drehantrieb der Küchenmaschine so, dass eine Rotation des Rührwerkes automatisch auch zu einer Rotation der Reinigungseinrichtung bzw. des Reinigungselementes führt und somit ein Entlangstreichen des Reinigungselementes auf der zu reinigenden Fläche bewirkt.

Die Reinigungseinrichtung kann des Weiteren unmittelbar mit einer Rotationswelle verbunden sein, welche üblicherweise zur Verbindung mit einem Rührwerk, insbesondere einem Messersatz und/oder einem Milchschaumaufsatz, dient. Dabei wird die Reinigungseinrichtung anstatt an dem Rührwerk unmittelbar mit der Rotationswelle verbunden. Diese Ausführung ist besonders komfortabel, da der Nutzer das Rührwerk nur durch die Reinigungseinrichtung tauschen muss. Weitere Montagemaßnahmen entfallen. Alternativ kann die Reinigungseinrichtung jedoch auch - wie zuvor erläutert - an dem bereits vorhandenen Rührwerk, beispielsweise einem Messersatz, befestigt werden, so dass die Reinigungseinrichtung bei Rotation des Messersatzes mit rotiert. Ebenso verhält es sich im Falle eines Milchschaumaufsatzes als Rührwerk, wobei der Milchschaumaufsatz üblicherweise zusätzlich an einem Messersatz befestigt wird, so dass die Reinigungseinrichtung mit dem Messersatz bzw. dem Milchschaumaufsatz mit rotiert.

Durch die vorgenannten Ausbildungen werden Verschmutzungen von der Innenwandung des Rührgefäßes gelöst. Insbesondere lassen sich Verschmutzungen auch dort lösen, wo die manuelle Reinigung und/oder die Reinigung mittels einer rotierenden Wassertrombe innerhalb des Rührgefäßes besonders schwierig oder unmöglich ist, nämlich in dem Bodenbereich des Rührgefäßes, welcher regelmäßig durch einen Messersatz oder ähnliches überdeckt ist. Die Reinigungseinrichtung ist gemäß der Erfindung so ausgebildet, dass diese zumindest mit einem Teilbereich in mechanischem Kontakt mit der Innenwandung, insbesondere der Bodenfläche, des Rührgefäßes steht und somit genau auf die zu reinigenden Stellen einwirkt.

Insbesondere ist die Reinigungseinrichtung so an dem Rührwerk oder anstelle eines Rührwerkes anordenbar, dass diese bei einer Rotation des Rührwerkes bzw. der Rotationswelle über die Innenwandung des Rührgefäßes, insbesondere über den Gefäßboden, und/oder auch über Teilbereiche des Messersatzes streicht.

Vorteilhaft weist die Reinigungseinrichtung ein zentrales Trägerelement, beispielsweise eine Platte oder ähnliches, auf, an welchem, beispielsweise in Umfangsrichtung, mehrere Reinigungselemente benachbart befestigt sind. Das Trägerelement kann eine Vielzahl von Reinigungselementen aufnehmen und an dem Rührwerk und/oder Messersatz und/oder Milchschaumaufsatz befestigt sein. Die Reinigungselemente weisen im eingebauten Zustand der Reinigungseinrichtung in dem Rührgefäß vorteilhaft in Richtung der Innenwandung des Rührgefäßes, wobei ein Kontakt zwischen den Reinigungselementen und der Innenwandung besteht.

Die Reinigungselemente können beispielsweise Borsten, Textilfasern, Metallfasern und/oder ähnliches aufweisen. Wesentlich ist dabei, dass die Reinigungselemente einen Reinigungseffekt auf der zu reinigenden Innenwandung des Rührgefäßes erzielen. Als Borsten kommen dabei insbesondere Metallborsten oder Naturborsten in Frage. Grundsätzlich eignen sich alle Materialien, die üblicherweise auch bei der Reinigung von Kochgeschirr, insbesondere Metalltöpfen, verwendet werden. Dazu zählen unter anderem auch Textilfasern, Schwämme, Stahlwolle usw. Die individuelle Ausbildung der Reinigungselemente kann dabei auf die Kochgewohnheiten des Nutzers des Rührgefäßes abgestimmt sein.

Es wird vorgeschlagen, dass die Reinigungseinrichtung Verbindungselemente zur Herstellung einer Steckverbindung, einer Schraubverbindung, einer Bajonettverbindung, einer Rastverbindung und/oder einer Magnetverbindung mit dem Rührwerk aufweist. Erfindungsgemäß kann die Reinigungseinrichtung somit ein oder mehrere Verbindungselemente aufweisen, welche mit entsprechenden Verbindungselementen des Rührwerkes korrespondieren. Dabei kann die Verbindung eine Formschlussverbindung, eine Kraftschlussverbindung, eine Verbindung durch Magnetkraft oder ähnliches sein. Im Falle einer Steckverbindung kann die Reinigungseinrichtung einen Teilbereich aufweisen, in welchen beispielsweise ein Teilbereich des Rührwerkes steckbar ist. Im Falle einer Schraubverbindung können ein Teilbereich der Reinigungseinrichtung und ein Teilbereich des Rührwerkes korrespondierende Gewinde aufweisen, welche miteinander verschraubbar sind. Im Falle einer Bajonettverbindung kann ein Teilbereich der Reinigungseinrichtung durch eine Drehbewegung an einem Teilbereich des Rührwerkes verklemmt werden. Im Falle einer Rastverbindung kann ein üblicher Hinterschnitt zur Anwendung kommen, wobei ein Teilbereich der Reinigungseinrichtung hinter einen korrespondierenden Teilbereich des Rührwerkes schnappt. Selbstverständlich ist es bei diesen Ausführungsformen angebracht, die Verbindung reversibel auszubilden, so dass der Nutzer der Reinigungseinrichtung diese komfortabel wieder von dem Rührwerk lösen kann. Dies kann beispielsweise durch eine an der Reinigungseinrichtung oder dem Rührwerk angeordnete Taste, Griff oder ähnliches sichergestellt sein. Im Falle einer Magnetverbindung kann die Reinigungseinrichtung einen Permanentmagneten aufweisen, welcher mit einem magnetischen oder magnetisierbaren Teilbereich des Rührwerkes korrespondiert. Insbesondere eignet sich hierfür ein magnetisches Material, wie beispielsweise magnetischer, korrosionsbeständiger Stahl, welcher gleichzeitig auch für die Zubereitung von Lebensmitteln geeignet ist.

Es wird vorgeschlagen, dass das Reinigungselement zur mechanischen Zusammenwirkung mit der Innenwandung und/oder dem Rührwerk in einen zwischen Messern eines Messersatzes oder Flügeln eines Milchschaumaufsatzes ausgebildeten Teilkreisabschnitt eingreift. Gemäß dieser Ausführungsform kann das Reinigungselement beispielsweise ein zentrales Trägerelement mit mehreren sich davon nach außen erstreckenden Reinigungsarmen aufweisen, wobei sich die Reinigungsarme bezogen auf die Rotationsachse des Rührwerkes bzw. des zentralen Trägerelementes radial nach außen erstrecken. Da das Trägerelement vorteilhaft zentral an der Rotationswelle des Rührwerks angeordnet ist, können die einzelnen Reinigungsarme der Reinigungseinrichtung zwischen den Messern des Messersatzes und/oder benachbarten Flügeln des Milchschaumaufsatzes positioniert werden, so dass die Endbereiche der Reinigungsarme, an welchen vorteilhaft die Reinigungselemente angeordnet sind, in diese Teilkreisabschnitte eingreifen und dort eine Reinigung der Innenwandung des Rührgefäßes und/oder des Rührwerkes vornehmen können. Bei einem üblichen Messersatz, welcher beispielsweise vier Messer aufweist, die jeweils einen Winkelabstand von 90° zueinander aufweisen, kann jeweils in die Viertelkreisabschnitte, welche zwischen benachbarten Messern ausgebildet sind, ein Reinigungsarm hineinragen und dort eine Reinigung bewirken.

Es kann vorgesehen sein, dass das Reinigungselement in Zusammenwirkung mit dem Rührwerk ein Planetengetriebe bildet, wobei zumindest ein Teilbereich des Rührwerkes als Sonnenrad wirkend ausgebildet ist und wobei das Reinigungselement als Planetenrad wirkend ausgebildet ist. Vorteilhaft ist das Reinigungselement dabei so angeordnet, dass dieses sowohl die Innenwandung des Rührgefäßes, als auch Teilbereiche des Rührwerkes kontaktiert und dadurch reinigt. Selbstverständlich ist es jedoch auch möglich, nur einen der genannten Bereiche zu reinigen.

Die Reinigungseinrichtung kann einen Ultraschallgeber aufweisen, der ortsfest in eine Gefäßwand des Rührgefäßes angeordnet ist oder welcher, insbesondere entfernbar, in dem Innenraum des Rührgefäßes angeordnet ist. Zusätzlich kann das Rührgefäß auch eine zuvor beschriebene mechanisch wirkende Reinigungseinrichtung aufweisen.

Die Reinigungseinrichtung weist einen Ultraschallgeber auf, welcher Schwingungen auf die Gefäßwand des Rührgefäßes überträgt und somit eine gegenüber dem Stand der Technik verbesserte Reinigung der Innenwandung bewirkt. Dabei wird die reinigende Wirkung von Ultraschall genutzt, wobei der Ultraschallgeber die Schwingungsenergie entweder unmittelbar auf die Gefäßwand (bei einer Anordnung des Ultraschallgebers innerhalb der Gefäßwand) überträgt oder mittelbar über ein in dem Rührgefäß angeordnetes Medium, wie beispielsweise Wasser (bei einer Anordnung des Ultraschallgebers in dem Innenraum des Rührgefäßes). Der Reinigungserfolg kann gegebenenfalls zusätzlich durch ein Reinigungsmittel, beispielsweise Tenside, unterstützt werden. In der Praxis hat sich herausgestellt, dass so eine optimale Selbstreinigung des Rührgefäßes erreicht werden kann.

Vorteilhaft kann der Ultraschallgeber in eine in der Gefäßwand, insbesondere in einem Gefäßboden, angeordnete Heizeinrichtung integriert sind. Insbesondere kann der Ultraschallgeber kombiniert mit der Heizeinrichtung in die Gefäßwandung eingeschweißt sein.

Der Ultraschallgeber ist zusätzlich zu einem mechanischen Reinigungsaufsatz wie zuvor beschrieben vorgesehen. Für eine optimale Reinigung der Innenwandung des Rührgefäßes wird eine Ultraschallfrequenz zwischen 10 und 100 kHz, insbesondere 20 kHz bis 50 kHz, empfohlen. Die elektrische Leistung beträgt vorteilhaft 20 W bis 200 W, insbesondere ungefähr 100 W.

Zusätzlich zu der mechanischen und ggf. mit Ultraschall wirkenden Reinigungseinrichtung können Glas- und/oder Metallkugeln in das Rührgefäß eingebracht werden, welche die Innenwandung des Rührgefäßes zusätzlich kontaktieren und mechanisch auf die an der Innenwandung anhaftenden Ablagerungen einwirken.

Schließlich eignet sich das erfindungsgemäße Rührgefäß mit der einen Ultraschallgeber aufweisenden Reinigungseinrichtung ebenfalls zur Zubereitung von Speisen. Insbesondere eignet sich das erfindungsgemäße Rührgefäß, um

Milchschaum zuzubereiten, insbesondere in Verbindung mit einem rotierenden Milchschaumaufsatz innerhalb des Rührgefäßes und gegebenenfalls zusätzlich dem Betrieb einer Heizeinrichtung für das Rührgefäß. Durch die Ultraschallbestrahlung der in dem Rührgefäß enthaltenen Milch wird die Oberflächenspannung der Fettmoleküle reduziert, so dass diese besser mit Luft und/oder Wasserdampf vermischt werden können und es somit zu einer Aufschäumung kommt.

Neben dem erfindungsgemäßen Rührgefäß wird schließlich auch eine elektromotorisch betriebene Küchenmaschine vorgeschlagen, welche ein solches Rührgefäß mit einer zuvor beschriebenen Reinigungseinrichtung aufweist.

Im Folgenden wird die Erfindung anhand von Ausführungsbeispielen näher erläutert. Es zeigen:
- Fig. 1: Eine Küchenmaschine mit einem Rührgefäß in einer Querschnittsansicht,
- Fig. 2: eine perspektivische Draufsicht auf ein Rührgefäß,
- Fig. 3: ein Rührgefäß mit einer Reinigungseinrichtung nach einer ersten Ausführungsform in einer Querschnittsansicht,
- Fig. 4: das Rührgefäß gemäß Fig. 3 in einer perspektivischen Draufsicht,
- Fig. 5: ein Rührgefäß mit einer Reinigungseinrichtung nach einer zweiten Ausführungsform in einer perspektivischen Draufsicht,
- Fig. 6 a)-c): verschiedene Ausführungsformen von Verbindungselementen zur Verbindung einer Reinigungseinrichtung mit einem Rührwerk,
- Fig. 7: ein Rührgefäß mit einer Reinigungseinrichtung nach einer dritten Ausführungsform in einer Querschnittsansicht, und
- Fig. 8: ein Gefäßboden eines Rührgefäßes mit einer Kombination aus einer Reinigungseinrichtung und einer Heizeinrichtung.

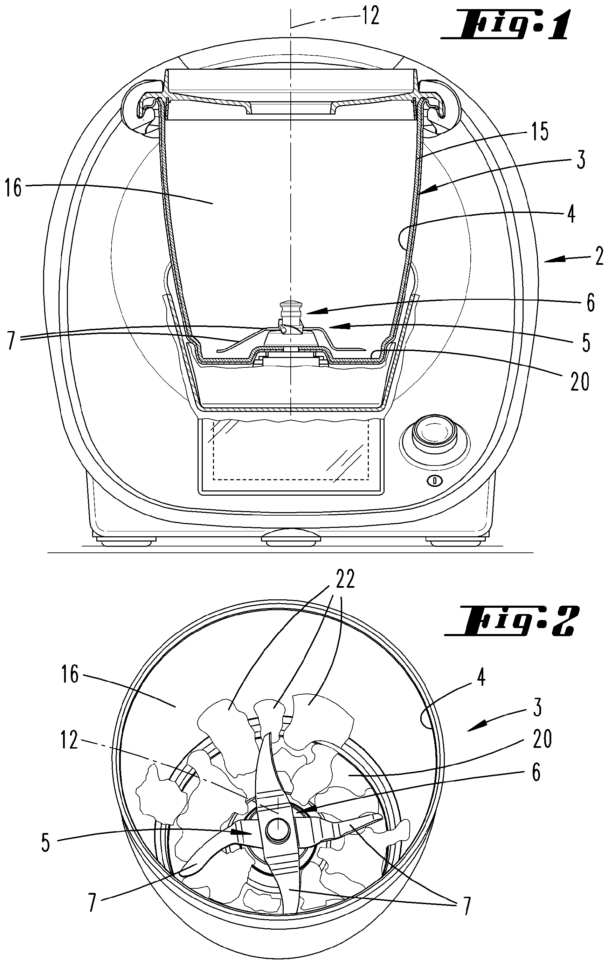

Figur 1 zeigt eine elektromotorisch betriebene Küchenmaschine 2, welche hier beispielsweise als Koch-Mixgerät ausgebildet ist. In die Küchenmaschine 2 ist ein Rührgefäß 3 eingesetzt, welches eine Gefäßwand 15 mit einer einen Innenraum 16 des Rührgefäßes 3 begrenzenden Innenwandung 4, inklusive eines Gefäßbodens 20, aufweist.

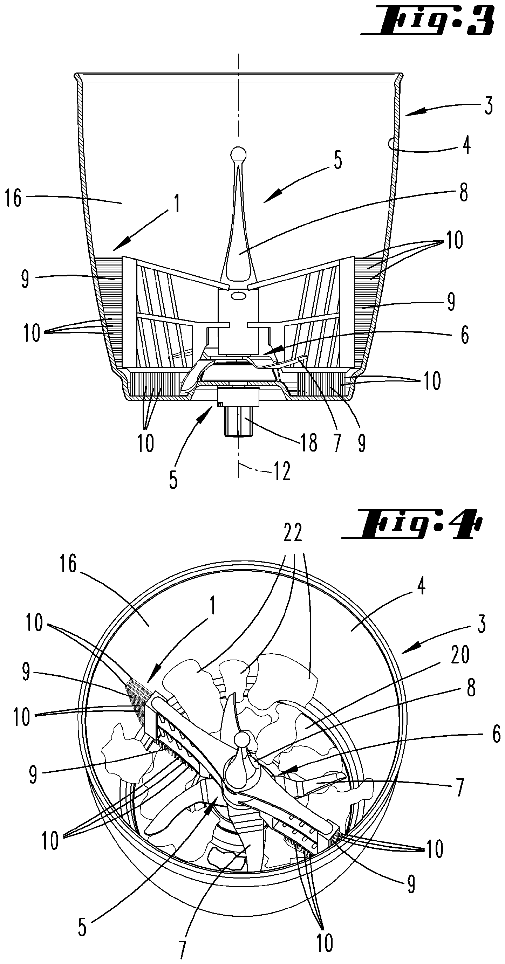

Innerhalb des Rührgefäßes 3 ist ein Rührwerk 5, hier in Form eines Messersatzes 6, angeordnet. Das Rührwerk 5 ist an einer eine Rotationsachse 12 aufweisenden Rotationswelle (nicht dargestellt) angeordnet, welche endseitig mittels eines Kupplungsmitnehmers (18, siehe Figur 3) mit einem Drehantrieb der Küchenmaschine 2 verbunden ist. Der Messersatz 6 weist hier beispielsweise zwei Messer 7 auf, welche sich im Bereich der Rotationsachse 12 kreuzen und in einem Winkel von 90° zueinander versetzt sind. Die Messer 7 weisen jeweils zwei gegenüberliegende und gegensinnig sichelförmig verlaufende Endabschnitte auf, welche an der konkaven Seite Messerschneiden aufweisen.

Figur 2 zeigt eine Draufsicht auf ein Rührgefäß 3, welches nach einer Zubereitung von Speisen Ablagerungen 22 an der Innenwandung 4 des Rührgefäßes 3, insbesondere an dem Gefäßboden 20, aufweist. Die Ablagerungen 22 sind Speisereste der in dem Rührgefäß 3 zubereiteten Speisen, welche an der Innenwandung 4 anhaften. Typischerweise können die Speisereste an der Innenwandung 4 kleben oder dort angebrannt sein. Es sind unterschiedlichste Arten von Ablagerungen 22 denkbar, beispielsweise Speisereste von Milch, Sahne, Mehl und Wasser, Schokolade, Erdnussbutter, Zucker, Kaffee, Öl, Pudding, Speisefarbe, Tomatensauce oder ähnliches. Die Ablagerungen 22 können eine geschlossene Schicht auf der Innenwandung 4 bilden oder - wie dargestellt - aus einzelnen Fragmenten bestehen.

Figur 3 zeigt ein Rührgefäß 3 mit einer Reinigungseinrichtung 1, welche mit dem Rührwerk 5 verbunden ist. Das Rührwerk 5 weist hier beispielsweise einen üblicherweise für das Aufschäumen von Milch verwendeten Milchschaumaufsatz 8, der auch als sogenannter Butterfly-Einsatz bekannt ist, auf. Zusätzlich weist das Rührwerk 5 einen Messersatz 6 auf, an welchem der Milchschaumaufsatz 8 angeordnet ist. Die Reinigungseinrichtung 1 weist mehrere, hier vier, Reinigungselemente 9 auf, die wiederum jeweils eine Vielzahl von nebeneinander angeordneten Borsten 10 aufweisen. Zwei der Reinigungselemente 9 sind in Bezug auf die Rotationsachse 12 radial nach außen weisend an dem Milchschaumaufsatz 8 angeordnet, während zwei weitere Reinigungselemente 9 bei einer üblichen Orientierung des Milchschaumaufsatzes 8 innerhalb des Rührgefäßes 3 unter dem Milchschaumaufsatz 8 angeordnet sind, so dass die Borsten 10 in Richtung des Gefäßbodens 20 weisen. Die Reinigungseinrichtung 1 kann beispielsweise durch eine Rastverbindung, Steckverbindung oder ähnliches an dem Milchschaumaufsatz 8 befestigt sein. Es ist sowohl möglich, die Reinigungseinrichtung 1 als ein Teil an dem Milchschaumaufsatz 8 anzuordnen, oder jedes Reinigungselement 9 der Reinigungseinrichtung 1 separat, wobei die erstgenannte Variante für den Nutzer aufgrund der geringeren benötigten Anzahl von Handgriffen komfortabler ist. Die Borsten 10 der Reinigungseinrichtung 1 sind beispielsweise Stahlborsten, welche die Innenwandung 4 des Rührgefäßes 3 in montiertem Zustand des Milchschaumaufsatzes 8 und der Reinigungseinrichtung 1 zumindest mit einem Endbereich kontaktieren. Dadurch, dass die Reinigungseinrichtung 1 mit dem Rührwerk 5 der Küchenmaschine 2 verbunden ist, werden die Reinigungselemente 9 der Reinigungseinrichtung 1 bei einer Rotation des Rührwerkes 5 mittels des Drehantriebes der Küchenmaschine 2 automatisch mitbewegt, wobei die Borsten 10 über die Innenwandung 4 des Rührgefäßes 3 streichen und durch mechanische Zusammenwirkung mit den an der Innenwandung 4 befindlichen Ablagerungen 22 eine Ablösung der Ablagerungen 22 bewirken.

Figur 4 zeigt das Rührgefäß 3 gemäß Figur 3 in einer perspektivischen Ansicht von oben. Zu erkennen ist das Rührwerk 5, welches den Messersatz 6 und den darüber angeordneten Milchschaumaufsatz 8 aufweist. Die beiden unter dem Milchschaumaufsatz 8 angeordneten Reinigungselemente 9 der Reinigungseinrichtung 1 greifen in zwischen Messern 7 des Messersatzes 6 ausgebildete Teilkreisabschnitte 11, so dass die Borsten 10 der Reinigungselemente 9 in Kontakt mit dem Gefäßboden 20 gelangen und dort bei Rotation des Rührwerkes 5 eine Ablösung der Ablagerungen 22 bewirken.

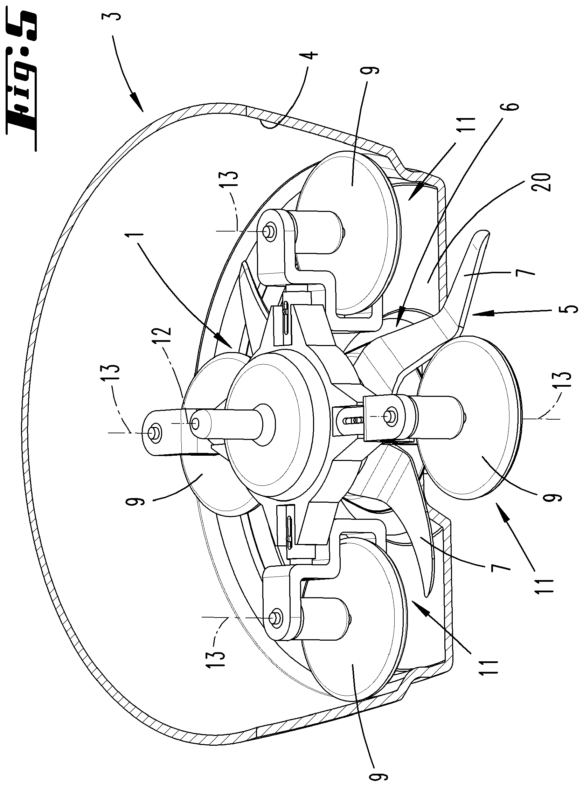

Figur 5 zeigt eine weitere Ausführungsvariante der Erfindung, gemäß welcher die Reinigungseinrichtung 1 nach der Art eines Planetengetriebes ausgebildet ist. Die Reinigungseinrichtung 1 ist an dem Rührwerk 5, hier dem Messersatz 6, angeordnet, wobei die Reinigungseinrichtung 1 vier tellerförmige Reinigungselemente 9 aufweist, welche in zwischen Messern 7 des Messersatzes 6 ausgebildete Teilkreisabschnitte 11 eingreifen. Die Reinigungseinrichtung 1 weist im Wesentlichen eine rotationssymmetrisch an dem Rührwerk 5, d. h. auch der Rotationsachse 12, angeordnete Basis auf, an welcher vier Reinigungsarme ausgebildet sind, die die tellerförmigen Reinigungselemente 9 tragen. Die Reinigungselemente 9 sind jeweils um eine Rotationsachse 13 rotationsbeweglich an den Reinigungsarmen angeordnet. Die Rotationsachsen 13 der als Planetenräder wirkenden Reinigungselemente verlaufen parallel zu der Rotationsachse 12 des Rührwerkes 5. Die tellerförmigen Reinigungselemente 9 stehen in radialer Richtung derart in Wirkverbindung mit der Innenwandung 4 des Rührgefäßes 3, dass die Reinigungselemente 9 bei einer Rotation des Rührwerkes 5 an der Innenwandung 4 abrollen und dabei sowohl um die Rotationsachse 12 als auch um die Rotationsachse 13 rotieren. Die Reinigungselemente 9 können wiederum Borsten 10 aufweisen (nicht dargestellt), welche den Gefäßboden 20 kontaktieren. Darüber hinaus ist es jedoch auch möglich, dass die tellerförmigen Reinigungselemente 9 nach der Art einer Schleifscheibe unmittelbar auf den Gefäßboden 20 einwirken. Je nach der Größe der Reinigungselemente 9 und der zwischen den Messern 7 ausgebildeten Teilkreisabschnitte 11 können die Reinigungselemente 9 bei einer Rotation um die Rotationsachse 13 gleichzeitig auch mechanisch auf die Messer 7 einwirken und diese gegebenenfalls von Ablagerungen 22 befreien.

Obwohl dies in der Figur nicht dargestellt ist, kann die Reinigungseinrichtung 1 anstelle von vier Reinigungselementen 9 selbstverständlich auch eins, zwei, drei oder mehr als vier Reinigungselemente 9 aufweisen. Darüber hinaus ist es ebenso möglich, die tellerförmig ausgebildeten Reinigungselemente 9 für eine Rotation um die Rotationsachsen 13 nicht an der Innenwandung 4 abrollen zu lassen, sondern diese mittels eines separaten Motors der Reinigungseinrichtung 1 zu rotieren. Diese Variante eignet sich insbesondere auch für Reinigungseinrichtungen 1, welche nicht drehfest mit dem Rührwerk 5 verbunden sind und somit bei einer Rotation des Rührwerkes 5 nicht mitrotieren. Durch die Ausstattung der Reinigungseinrichtung 1 mit einem eigenen Motor kann zudem sowohl die Rotation der Reinigungselemente 9 um die Rotationsachse 12 als auch die Rotationsachse 13 bewirkt werden.

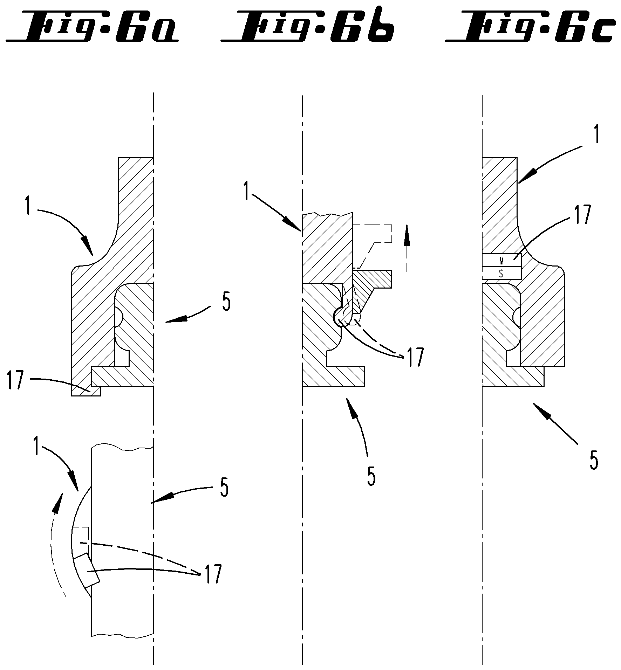

Die Figuren 6a bis 6c zeigen unterschiedliche Möglichkeiten, die Reinigungseinrichtung 1 an dem Rührwerk 5 zu befestigen. Das Rührwerk 5 kann beispielsweise ein Messersatz 6 sein. Figur 6a zeigt eine Bajonettverbindung, bei welcher ein Verbindungselement 17 der Reinigungseinrichtung 1 unter einen korrespondierenden Teilbereich des Rührwerkes 5 greift. Figur 6b zeigt eine Rastverbindung, bei welcher ein flexibles Verbindungselement 17 der Reinigungseinrichtung 1 in einen korrespondierenden Teilbereich eines Rührwerkes 5, hier als Aussparung ausgebildet, eingreift. Figur 6c zeigt eine Magnetverbindung von Reinigungseinrichtung 1 und Rührwerk 5, bei welcher die Reinigungseinrichtung 1 ein als Permanentmagnet ausgebildetes Verbindungselement 17 aufweist, das mit einem magnetischen oder magnetisierbaren Teilbereich des Rührwerkes 5 zusammenwirkt. Vorteilhaft weist das Rührwerk 5 dabei zumindest in einem Teilbereich ein magnetisches Material auf, wie beispielsweise magnetischen, korrosionsbeständigen Stahl, welcher gleichzeitig auch für die Zubereitung von Lebensmitteln geeignet ist.

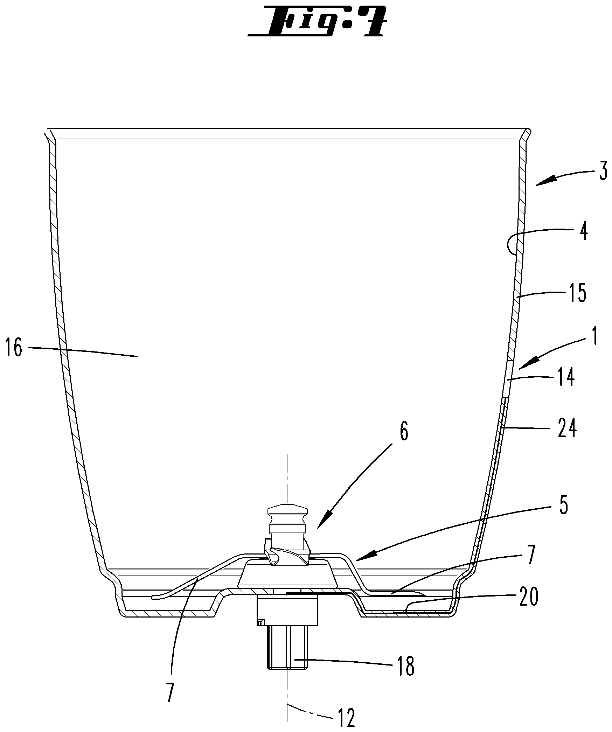

Figur 7 zeigt ein Rührgefäß 3 gemäß einer weiteren Ausführungsform der Erfindung, bei welcher die Reinigungseinrichtung 1 einen Ultraschallgeber 14 aufweist, welcher ortsfest in der Gefäßwand 15 des Rührgefäßes 3 angeordnet ist. Der Ultraschallgeber 14 weist eine elektrische Verbindung 24 auf, welche den Ultraschallgeber über den Kupplungsmitnehmer 18 des Rührwerks 5 mit einer Spannungsversorgung der Küchenmaschine 2 verbindet. Der Ultraschallgeber erzeugt während des Betriebs der Reinigungseinrichtung 1 Schwingungen, welche auf die Gefäßwand 15 des Rührgefäßes 3 übertragen werden und somit eine Ablösung von Ablagerungen 22 bewirken können. Dabei wird die reinigende Wirkung von Ultraschall genutzt, wobei der Ultraschallgeber 14 die Schwingungsenergie entweder ausschließlich unmittelbar auf die Gefäßwand 15 überträgt oder zusätzlich auch mittelbar über ein in dem Rührgefäß 3 angeordnetes Medium wie Wasser. Der Reinigungserfolg kann gegebenenfalls zusätzlich durch ein Reinigungsmittel, beispielsweise Tenside, unterstützt werden. Obwohl dies in der Figur nicht gezeigt ist, kann das Rührgefäß 3 zusätzlich zu dem Ultraschallgeber 14 selbstverständlich auch eine mechanisch wirkende Reinigungseinrichtung 1 aufweisen.

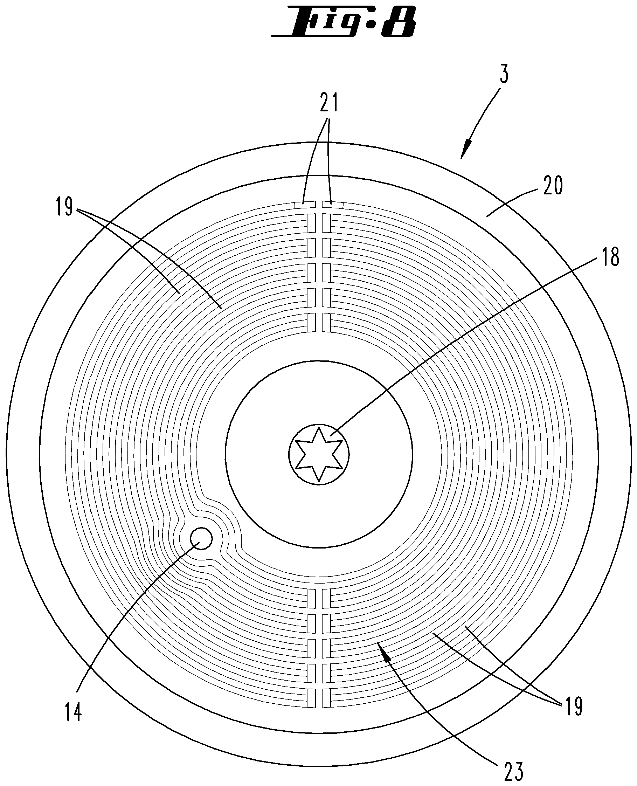

Figur 8 zeigt einen Gefäßboden 20 eines Rührgefäßes 3, welcher eine Kombination aus einer Heizeinrichtung 23 und einer Reinigungseinrichtung 1 aufweist. In dem Gefäßboden 20 sind eine Vielzahl von Leiterbahnen 19 mit elektrischen Kontaktpaaren 21 angeordnet, welche die Heizeinrichtung 23 bilden. Zwischen den Leiterbahnen 19 ist des Weiteren ein Ultraschallgeber 14 angeordnet, welcher Schwingungen erzeugt und auf den Gefäßboden 20 bzw. das gesamte Rührgefäß 3 übertragen kann. Die Heizungs-Reinigungs-Kombination kann besonders vorteilhaft in den Gefäßboden 20 eingeschweißt sein.

### Bezugszeichenliste:

- 1: Reinigungseinrichtung
- 2: Küchenmaschine
- 3: Rührgefäß
- 4: Innenwandung
- 5: Rührwerk
- 6: Messersatz
- 7: Messer
- 8: Milchschaumaufsatz
- 9: Reinigungselement
- 10: Borsten
- 11: Teilkreisabschnitt
- 12: Rotationsachse
- 13: Rotationsachse
- 14: Ultraschallgeber
- 15: Gefäßwand
- 16: Innenraum
- 17: Verbindungselement
- 18: Kupplungsmitnehmer
- 19: Leiterbahn
- 20: Gefäßboden
- 21: Kontaktpaar
- 22: Ablagerung
- 23: Heizeinrichtung
- 24: Elektrische Verbindung

## Patentansprüche

1. Rührgefäß (3) für eine elektromotorisch betriebene Küchenmaschine (2), welches Rührgefäß (3) ein Rührwerk (5), insbesondere einen Messersatz (6) oder einen Milchschaumaufsatz (8), aufweist, das mittels eines Kupplungsmitnehmers (18) mit einem Drehantrieb der Küchenmaschine (2) verbindbar ist, wobei das Rührgefäß (3) eine Reinigungseinrichtung (1) zur Reinigung einer Innenwandung (4) des Rührgefäßes (3), insbesondere eines Gefäßbodens (20), aufweist, wobei weiter die Reinigungseinrichtung (1) an dem Rührgefäß (3), insbesondere einer Gefäßwand (15) und/oder dem Rührwerk (5) angeordnet ist und mindestens ein Reinigungselement (9) aufweist, welches so ausgebildet ist, dass dieses bei einer Betätigung der Reinigungseinrichtung (1) über die Innenwandung (4) und/oder über Teilbereiche des Rührwerkes (5) streicht und durch mechanische Zusammenwirkung mit einer an der Innenwandung (4) und/oder dem Rührwerk (5) gegebenenfalls befindlichen Ablagerung (22) diese zu entfernen hilft, **dadurch gekennzeichnet, dass** das Reinigungselement (9) zusätzlich zu einer Rotation um eine Rotationsachse (12) des Rührwerkes (5) um eine parallel zu der Rotationsachse (12) angeordnete Rotationsachse (13) rotierbar ist.

2. Rührgefäß (3) nach Anspruch 1, **dadurch gekennzeichnet, dass** die Reinigungseinrichtung (1) so mit dem Rührwerk (5) verbindbar ist, dass das Reinigungselement (9) bei einer Rotation des Drehantriebes der Küchenmaschine (2) mitbewegt wird.

3. Rührgefäß (3) nach Anspruch 2, **dadurch gekennzeichnet, dass** die Reinigungseinrichtung (1) Verbindungselemente (17) zur Herstellung einer Steckverbindung, einer Schraubverbindung, einer Bajonettverbindung, einer Rastverbindung und/oder einer Magnetverbindung mit dem Rührwerk (5) aufweist.

4. Rührgefäß (3) nach einem der vorhergehenden Ansprüche, **dadurch gekennzeichnet, dass** das Reinigungselement (9) Borsten (10), Textilfasern und/oder Metallfasern aufweist.

5. Rührgefäß (3) nach einem der vorhergehenden Ansprüche, **dadurch gekennzeichnet, dass** das Reinigungselement (9) zur mechanischen Zusammenwirkung mit der Innenwandung (4) und/oder dem Rührwerk (5) in einen zwischen Messern (7) eines Messersatzes (6) oder Flügeln eines Milchschaumaufsatzes (8) ausgebildeten Teilkreisabschnitt (11) eingreift.

6. Rührgefäß nach einem der vorhergehenden Ansprüche, **dadurch gekennzeichnet, dass** das Reinigungselement (9) in Zusammenwirkung mit dem Rührwerk (5) ein Planetengetriebe bildet, wobei zumindest ein Teilbereich des Rührwerkes (5) als Sonnenrad wirkend ausgebildet ist und wobei das Reinigungselement (9) als Planetenrad wirkend ausgebildet ist.

7. Rührgefäß (3)nach einem der vorhergehenden Ansprüche, **dadurch gekennzeichnet, dass** die Reinigungseinrichtung (1) einen Ultraschallgeber (14) aufweist, welcher ortsfest in einer Gefäßwand (15) des Rührgefäßes (3) angeordnet ist, oder welcher, insbesondere entfernbar, in dem Innenraum (16) des Rührgefäßes (3) angeordnet ist.

8. Rührgefäß (3) nach Anspruch 7, **dadurch gekennzeichnet, dass** der Ultraschallgeber (14) in eine in der Gefäßwand (15), insbesondere in einem Gefäßboden (20), angeordnete Heizeinrichtung (23) integriert ist.

9. Elektromotorisch betriebene Küchenmaschine (2) mit einem Rührgefäß (3), welches nach einem der vorhergehenden Ansprüche ausgebildet ist.

## Claims

1. A mixing vessel (3) for an electromotively driven food processor (2), which mixing vessel (3) has a mixing mechanism (5), in particular a knife set (6) or a milk foaming attachment (8), which by means of a coupling driver (18) can be connected with the rotary drive of the food processor (2), wherein the mixing vessel (3) has a cleaning device (1) for purposes of cleaning an inner wall (4) of the mixing vessel (3), in particular, a vessel floor (20), wherein further, the cleaning device (1) is arranged on the mixing vessel (3), in particular on a vessel wall (15), and/or on the mixing mechanism (5), and has at least one cleaning element (9) that is designed such that the latter is swept over the inner wall (4) and/or over subregions of the mixing mechanism (5) by an actuation of the cleaning device (1), and, by a mechanical interaction with any deposits (22) that may be located on the inner wall (4) and/or the mixing mechanism (5), helps to remove them, **characterised in that**, the cleaning element (9), in addition to a rotation about an axis of rotation (12) of the mixing mechanism (5), can rotate about an axis of rotation (13) arranged in parallel to the first axis of rotation (12).

2. The mixing vessel (3) in accordance with claim 1, **characterised in that**, the cleaning device (1) is connected with the mixing mechanism (5) such that with a rotation of the rotary drive of the food processor (2) the cleaning element (9) is moved together with the latter.

3. The mixing vessel (3) in accordance with claim 2, **characterised in that**, the cleaning device (1) has connecting elements (17) for purposes of making a plug-in connection, a screw-in connection, a bayonet connection, a latch-in connection, and/or a magnetic connection with the mixing mechanism (5).

4. The mixing vessel (3) in accordance with one of the preceding claims, **characterised in that**, the cleaning element (9) has bristles (10), textile fibres, and/or metal fibres.

5. The mixing vessel (3) in accordance with one of the preceding claims, **characterised in that**, for purposes of mechanical interaction with the inner wall (4) and/or the mixing mechanism (5), the cleaning element (9) intervenes in a partial circular segment (11) formed between knives (7) of a knife set (6), or wings of a milk foaming attachment (8).

6. The mixing vessel in accordance with one of the preceding claims, **characterised in that**, the cleaning element (9) in conjunction with the mixing mechanism (5) forms planetary gearing, wherein at least a subregion of the mixing mechanism (5) is designed to act as a sun gear, and wherein the cleaning element (9) is designed to act as a planet gear.

7. The mixing vessel (3) in accordance with one of the preceding claims, **characterised in that**, the cleaning device (1) has an ultrasonic transmitter (14), which is arranged in a fixed location in a vessel wall (15) of the mixing vessel (3), or which is arranged in the interior (16) of the mixing vessel (3), in particular such that it can be removed.

8. The mixing vessel (3) in accordance with claim 7, **characterised in that**, the ultrasonic transmitter (14) is integrated into a heating device (23) arranged in the vessel wall (15), in particular in a vessel floor (20).

9. An electromotively driven food processor (2) with a mixing vessel (3), which is designed in accordance with one of the preceding claims.

## Revendications

1. Récipient d'agitation (3) pour un appareil de cuisine (2) à moteur électrique, lequel récipient d'agitation (3) comprend un agitateur (5), en particulier un ensemble à couteau(x) (6) ou un accessoire de moussage de lait (8), qui peut être relié par l'intermédiaire d'un dispositif d'entraînement à accouplement (18) à un entraînement rotatif de l'appareil de cuisine (2), dans lequel le récipient d'agitation (3) comprend un dispositif de nettoyage (1) pour nettoyer une paroi intérieure (4) du récipient d'agitation (3), en particulier un fond de récipient (20), dans lequel en outre le dispositif de nettoyage (1) est fixé au/agencé sur le récipient d'agitation (3), en particulier à une paroi de cuve (15) et/ou à l'agitateur (5) et présente au moins un élément de nettoyage (9) qui est conçu de manière que, lorsque le dispositif de nettoyage (1) est actionné, il lèche la paroi intérieure (4) et/ou des zones partielles de l'agitateur (5) et contribue à éliminer un dépôt (9) situé le cas échéant sur la paroi intérieure (4) et/ou sur l'agitateur (5) par interaction mécanique avec le dépôt (9), **caractérisé en ce que** l'élément de nettoyage (9) peut, en plus d'une rotation autour d'un axe de rotation (12) de l'agitateur (5), être tourné autour d'un axe de rotation (13) agencé parallèlement à l'axe de rotation (12).

2. Récipient d'agitation (3) selon la revendication 1, **caractérisé en ce que** le dispositif de nettoyage (1) peut être relié à l'agitateur (5) de manière que l'élément de nettoyage (9) soit déplacé conjointement lors d'une rotation de l'entraînement rotatif de l'appareil de cuisine (2).

3. Récipient d'agitation (3) selon la revendication 2, **caractérisé en ce que** le dispositif de nettoyage (1) présente des éléments de liaison (17) pour réaliser une liaison enfichable, une liaison à vis, une liaison à baïonnette, une liaison à verrouillage de forme et/ou une liaison magnétique avec l'agitateur (5) .

4. Récipient d'agitation (3) selon l'une des revendications précédentes, **caractérisé en ce que** l'élément de nettoyage (9) comprend des poils (10), des fibres textiles et/ou des fibres métalliques.

5. Récipient d'agitation (3) selon l'une des revendications précédentes, **caractérisé en ce que** pour interagir mécaniquement avec la paroi intérieure (4) et/ou l'agitateur (5), l'élément de nettoyage (9) intervient dans un secteur de cercle partiel (11) formé entre des couteaux (7) d'un ensemble à couteaux (6) ou entre des ailes d'un accessoire de moussage de lait (8).

6. Récipient d'agitation selon l'une des revendications précédentes, **caractérisé en ce que** l'élément de nettoyage (9) forme un engrenage planétaire en coopération avec l'agitateur (5), au moins une zone partielle de l'agitateur (5) étant formée pour agir en tant que roue planétaire et l'élément de nettoyage (9) étant formé pour agir comme roue satellite.

7. Récipient d'agitation (3) selon l'une des revendications précédentes, **caractérisé en ce que** le dispositif de nettoyage (1) présente un générateur d'ultrasons (14) qui est agencé de manière fixe dans une paroi de récipient (15) du récipient d'agitation (3) ou qui est agencé, en particulier de manière amovible, dans l'espace intérieur (16) du récipient d'agitation (3).

8. Récipient d'agitation (3) selon la revendication 7, **caractérisé en ce que** le générateur d'ultrasons (14) est intégré dans un dispositif de chauffage (23) agencé dans la paroi (15) du récipient, en particulier dans un fond de récipient (20).

9. Appareil de cuisine à moteur électrique (2), comprenant un récipient d'agitation (3) qui est réalisé conformément à l'une des revendications précédentes.
